# FASCICULE DE BREVET EUROPEEN

(11) **EP 4 609 101 B1**
(45) Date de publication et mention de la délivrance du brevet: **26.11.2025**
(21) Numéro de dépôt: 23794408.7
(22) Date de dépôt: 25.10.2023
(51) Int. Cl.: F16L 41/02, F16L 41/08, B23K 31/02, B23K 33/00, B23K 31/12

(54) **RACCORD TUBULAIRE METALLIQUE ET PROCÉDÉ DE FABRICATION CORRESPONDANT**
METALLROHRVERBINDER UND VERFAHREN ZU SEINER HERSTELLUNG
METAL TUBULAR JOINT AND METHOD FOR MANUFACTURING SAME

(30) Priorité: 27.10.2022 FR 2211220
(43) Date de publication de la demande: 03.09.2025
(73) Titulaire: Vallourec Oil and Gas France, 59620 Aulnoye-Aymeries (FR)
(72) Inventeur: SEIBOTH, Wolf, 92190 Meudon (FR); PROTZEL, Peter, 92190 Meudon (FR); HUBERT, Marine, 92190 Meudon (FR)
(74) Mandataire: Leveille, Romain
(86) Numéro de dépôt international: PCT/EP2023/079850
(87) Numéro de publication internationale: WO 2024/089138

(56) Documents cités:
- CN-A- 114 183 615
- US-A1- 2014 151 440

## Description

### Domaine technique

L'invention se rapporte au domaine des composant tubulaires utilisés dans différents domaines de l'industrie de l'énergie tels que la production électrique, le transport ou l'exploitation du pétrole, du gaz, de l'hydrogène ainsi que dans la construction mécanique. Plus particulièrement l'invention se rapporte à un raccord de tels composants tubulaires.

### Arrière-plan technologique

Des tubes métalliques sont largement utilisés dans différents domaines de l'industrie de l'énergie tels que la production électrique, le transport ou l'exploitation du pétrole, du gaz, de l'hydrogène ainsi que dans la construction mécanique.

Un raccord entre deux tubes, par exemple un raccord en « T », comporte d'une part un premier tube présentant deux extrémités ouvertes et un orifice dans sa paroi entre lesdites deux extrémités ouvertes et, d'autre part, un deuxième tube présentant une extrémité ouverte complémentaire de l'orifice du premier tube. Plus particulièrement, l'extrémité ouverte du deuxième tube est configurée pour épouser la forme du premier tube autour de l'orifice. Cette extrémité ouverte du deuxième tube est jointe au premier tube par soudure par dépôt de matière afin d'assurer l'étanchéité du raccord. Ainsi, l'extrémité ouverte du deuxième tube débouche dans le premier tube au niveau de l'orifice du premier tube entre les deux extrémités ouvertes dudit premier tube. Les documents US2014151440A1 ou CN114183615A dévoilent de tels raccords.

Cependant, un tel raccord avec dépôt de matière présente de nombreux inconvénients.

En effet, dans le cadre d'un raccord entre deux tubes métalliques, le dépôt de matière est réalisé en métal à haute température. Cette haute température du dépôt de matière peut dégrader le premier tube au niveau de l'orifice. En particulier, la paroi du premier tube autour de l'orifice peut se déformer sous l'effet de la chaleur du dépôt de matière, par exemple par une déformation vers l'intérieur du premier tube. En outre, ce dépôt de matière à haute température peut dégrader les performances de résistance mécanique des tubes au niveau de la jonction. Il est donc nécessaire d'appliquer un coefficient de réduction des performances pour le raccord afin de prendre en compte les pertes de performance mécanique liées au dépôt.

En outre, il est nécessaire de contrôler l'intégrité du dépôt de matière après sa réalisation. En particulier, il est important de s'assurer que le dépôt de matière ne comporte pas de défauts tels que des inclusions de matière, des fissures ou encore des porosités. De manière générale, toute hétérogénéité dans le dépôt de matière est vu comme une imperfection qui est susceptible de nuire à la résistance mécanique du raccord en service.

Ce contrôle doit être réalisé par un procédé non destructif par exemple au moyen d'ultrasons envoyés dans le dépôt de matière et analyse des ondes ultrasonores renvoyées par des défauts éventuels présents dans le dépôt de matière. Cependant, l'envoi d'ondes ultrasonores dans le dépôt de matière est particulièrement complexe du fait que le dépôt de matière se développe le long de la jonction entre l'orifice du premier tube et l'extrémité ouverte du deuxième tube, c'est-à-dire se développant à la fois selon une direction circonférentielle autour du premier tube et selon une direction circonférentielle autour du deuxième tube. Le positionnement optimal d'un dispositif d'envoi d'ondes ultrasonore et l'analyse des échos renvoyés pour contrôler le dépôt de matière est particulièrement complexe.

De façon analogue, lorsque le raccord doit subir un traitement de surface, un tel traitement de surface est particulièrement complexe à réaliser sur le dépôt de matière au niveau de la zone de jonction, les outils de traitement de surface étant complexes à positionner et déplacer le long de la zone de jonction.

Il existe donc un besoin de raccord métallique qui soit simple à fabriquer, fiable et simple à contrôler.

### Résumé

Une idée à la base de l'invention est de fournir un raccord entre deux composants tubulaires simple à fabriquer, fiable et simple à contrôler. En particulier, une idée à la base de l'invention est de fournir un tel raccord présentant un dépôt de matière sans dégradation préjudiciable du premier composant tubulaire au niveau de la jonction. Plus particulièrement, une idée à la base de l'invention est de fournir un tel raccord dont les éventuelles dégradations du premier composant tubulaire liée au dépôt de matière ne portent pas préjudice à l'intégrité du raccord. Une idée à la base de l'invention est de fournir un tel raccord qui soit simple à contrôler, en particulier par des procédés de contrôle non destructifs à base d'ondes ultrasonores. Une idée à la base de l'invention est également de fournir un tel raccord qui soit simple à fabriquer. Ainsi, une idée à la base de l'invention est de fournir un tel raccord qui soit simple à traiter au moyen d'un outil de traitement de surface, en particulier au niveau du dépôt de matière.

Selon un mode de réalisation, l'invention fournit un raccord tubulaire métallique comportant un premier composant tubulaire et un deuxième composant tubulaire, le premier composant tubulaire et le deuxième composant tubulaire étant métalliques, le premier composant tubulaire se développant selon un premier axe, le deuxième composant tubulaire se développant selon un deuxième axe, le premier composant tubulaire comportant un orifice, une extrémité ouverte du deuxième composant tubulaire étant jointive du premier composant tubulaire le long d'une zone de jonction, ladite zone de jonction étant délimitée par l'orifice, le raccord comportant en outre un dépôt de matière au niveau de ladite zone de jonction de manière à assurer une étanchéité de la zone de jonction, le dépôt de matière présentant une surface plane se développant dans un plan parallèle au premier axe et parallèle au deuxième axe, ladite surface plane étant agencée au droit de la zone de jonction.

On entend par zone de jonction la zone définie par les surfaces de contact respectives du premier composant tubulaire et du deuxième composant tubulaire. Ainsi, un dépôt de matière au niveau de ladite zone de jonction est un dépôt de matière sur les surfaces externes du premier composant tubulaire et du deuxième composant tubulaire jointives de ladite zone de jonction.

Par ailleurs, on entend par sécant le fait que le premier axe et le deuxième axe soient sécants dans un même plan ou bien en projection dans un plan parallèle auxdits premier et deuxième axe. Autrement dit, le premier axe et le deuxième axe ne sont pas parallèles.

Grâce à ces caractéristiques, il est possible d'obtenir un raccord fiable et simple à contrôler.

En effet, le dépôt de matière présentant une surface plane au droit de la jonction comporte une quantité de matière déposée apte à combler une éventuelle déformation ou dégradation des performances mécaniques dans la zone de jonction du premier composant tubulaire liée à la chaleur produite par ledit dépôt de matière.

En outre, la présence d'une surface plane du dépôt de matière au droit de la jonction offre une surface simple le long de laquelle déplacer un émetteur d'ondes ultrasonores, le déplacement d'un tel émetteur le long de cette surface plane étant simple.

En particulier, la présence d'une telle surface plane parallèle à la fois au premier axe et au deuxième axe permet un positionnement dudit émetteur d'ondes ultrasonores simple pour que les ondes ultrasonores impactent le dépôt de matière perpendiculairement à ladite surface plane, les ondes ultrasonores étant ainsi plus simples à analyser car non impactées par les phénomènes de réflexion et d'incidence lorsqu'elles atteignent ladite surface plane.

De plus, une telle surface plane est simple à traiter par un traitement de surface, et en particulier par un traitement de surface nécessitant un outillage se déplaçant le long de la surface à traiter, par exemple un outil d'usinage apte à usiner ladite surface afin d'obtenir une surface dont la planéité est de bonne qualité afin de faciliter le contrôle via ondes ultrasonores.

Selon des modes de réalisation, un tel raccord tubulaire métallique peut comporter une ou plusieurs des caractéristiques suivantes, seules ou en combinaison.

Selon un mode de réalisation, la surface plane est une première surface plane, le dépôt de matière comportant en outre une deuxième surface plane, ladite deuxième surface plane se développant dans un plan perpendiculaire au premier axe, ladite deuxième surface plane étant agencée au droit de la zone de jonction.

Grâce à ces caractéristiques, le positionnement d'un dispositif d'émission d'ondes ultrasonores peut être optimisé de façon simple en étudiant la zone de jonction y compris dans des zones pour lesquelles l'épaisseur du dépôt de matière au droit de la première surface plane est trop importante pour être rapide et fiable. En effet, un simple positionnement dudit émetteur en vis-à-vis de la deuxième surface plane de façon analogue au positionnement déjà réalisé en vis-à-vis de la première surface plane permet également de contrôler le dépôt de matière de façon simple, fiable et rapide y compris dans les endroits éloignés ou présentant une forte épaisseur perpendiculairement à la première surface plane.

Selon un mode de réalisation, le dépôt de matière comporte en outre une troisième surface plane, ladite troisième surface plane se développant dans un plan perpendiculaire à la première surface plane et perpendiculaire à la deuxième surface plane, ladite troisième surface plane étant agencée au droit de la zone jonction.

De façon analogue à la deuxième surface plane, cette troisième surface plane permet un contrôle du dépôt de matière y compris dans les endroits éloignés ou présentant une forte épaisseur perpendiculairement à la première surface plane et/ou à la deuxième surface plane.

Selon un mode de réalisation, le dépôt de matière est en métal. Un tel dépôt de métal peut être réalisé de nombreuses manières, par exemple par le procédé portant le nom anglais de « *additive manufacturing* » ou impression en trois dimensions.

Un tel dépôt de matière métallique présente des caractéristiques comportementales et structurelles proches de celles des premier et deuxième composants tubulaires, assurant de bonnes propriétés mécaniques au raccord. En particulier un tel dépôt de matière métallique permet d'assurer une bonne étanchéité tout en garantissant une bonne résistance mécanique au raccord.

Selon un mode de réalisation, le deuxième composant tubulaire est en matériau identique au matériau du dépôt de matière.

Grâce à ces caractéristiques, il est possible de réaliser le deuxième composant tubulaire directement au moyen du dépôt de matière, par exemple par impression en trois dimensions. Ainsi, le raccord présente une bonne homogénéité comportementale et une bonne étanchéité en fonctionnement. En outre, il est alors possible de contrôler de façon simple et fiable la viabilité de l'ensemble du dépôt de matière, y compris du deuxième composant tubulaire.

Selon un mode de réalisation, tout point de la zone jonction est agencé au droit, selon le premier axe, d'une surface plane du dépôt de matière. Autrement dit, tout point de la zone jonction est agencé au droit, selon le premier axe de la deuxième surface plane du dépôt de matière. Selon un mode de réalisation, le dépôt de matière comporte une pluralité de deuxième surfaces planes. Selon un mode de réalisation, tout point de la zone jonction est agencé au droit, selon le premier axe, d'une desdites deuxième surface plane du dépôt de matière.

Selon un mode de réalisation, tout point de la zone de jonction est agencé au droit, selon le deuxième axe, d'une surface plane du dépôt de matière. Autrement dit, tout point de la zone jonction est agencé au droit, selon le deuxième axe, de la troisième surface plane du dépôt de matière. Selon un mode de réalisation, le dépôt de matière comporte une pluralité de troisièmes surfaces planes. Selon un mode de réalisation, tout point de la zone jonction est agencé au droit, selon le deuxième axe, d'une desdites troisième surface plane du dépôt de matière.

Selon un mode de réalisation, tout point de la jonction est agencé au droit, perpendiculairement au premier axe et perpendiculairement au deuxième axe, d'une surface plane du dépôt de matière. Autrement dit, tout point de la zone jonction est agencé au droit, perpendiculairement au premier axe et perpendiculairement au deuxième axe, de la première surface plane du dépôt de matière. Selon un mode de réalisation, le dépôt de matière comporte une pluralité de premières surfaces planes. Selon un mode de réalisation, tout point de la zone jonction est agencé au droit, perpendiculairement au premier axe et perpendiculairement au deuxième axe, d'une desdites première surface plane du dépôt de matière.

Grâce à ces caractéristiques, il est possible de contrôler de façon simple et fiable l'ensemble du dépôt de matière formant la jonction entre le premier composant tubulaire et le deuxième composant tubulaire.

Selon un mode de réalisation, le dépôt de matière est plein, selon une direction perpendiculaire à la première surface plane, entre la zone de jonction agencée au droit de la première surface plane et ladite première surface plane.

Selon un mode de réalisation, le dépôt de matière est plein, selon une direction perpendiculaire à la deuxième surface plane, entre la zone de jonction agencée au droit de la deuxième surface plane et ladite deuxième surface plane.

Selon un mode de réalisation, le dépôt de matière est plein, selon une direction perpendiculaire à la troisième surface plane, entre la zone de jonction agencée au droit de la troisième surface plane et ladite troisième surface plane.

Le premier composant tubulaire et le deuxième composant tubulaires peuvent prendre de nombreuses formes de section. Selon un mode de réalisation, le premier composant tubulaire est cylindrique de révolution. Selon un mode de réalisation le deuxième composant tubulaire est cylindrique de révolution. Selon un mode de réalisation, le premier composant tubulaire et le deuxième composant tubulaire présentent un même diamètre externe et/ou interne. Selon un mode de réalisation, l'un parmi ou les composant tubulaires sont de forme cylindrique de section rectangulaire ou carré.

Selon un mode de réalisation, le premier axe et le deuxième axe sont perpendiculaires. Selon un mode de réalisation, le premier axe et le deuxième axe forment un angle compris entre 30° et 90° inclus, préférentiellement entre 45° et 90° degrés inclus, encore plus préférentiellement entre 60° et 90° inclus et idéalement à 90° plus ou moins 5°.

Selon un mode de réalisation, l'invention fournit également un procédé de fabrication d'un raccord métallique tel que ci-dessus, le procédé comportant les étapes de :
- Fournir un premier composant tubulaire, ledit premier composant tubulaire comportant un orifice,
- Fournir un deuxième composant tubulaire, ledit deuxième composant tubulaire présentant une extrémité ouverte de forme complémentaire à la forme de l'orifice du premier composant tubulaire au niveau de l'orifice dudit premier composant tubulaire,
- Joindre l'extrémité ouverte du deuxième composant tubulaire et le premier composant tubulaire au niveau de l'orifice de manière à délimiter une zone de jonction entre le premier composant tubulaire et le deuxième composant tubulaire autour de l'orifice,
- Déposer un matériau au niveau de la jonction entre le premier composant tubulaire et le deuxième composant tubulaire de manière à former un dépôt de matière d'une part étanchéifiant la zone de jonction entre le premier composant tubulaire et le deuxième composant tubulaire et, d'autre part, présentant une surface plane au droit de ladite zone de jonction.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig. 1]La figure 1 est vue en perspective schématique d'un raccord tubulaire selon l'invention.
[fig. 2] La figure 2 est une vue en coupe avec perspective schématique du raccord de la figure 1.
[fig. 3] La figure 3 est une vue en coupe du raccord de la figure 1 analogue à la figure 2.
[fig. 4] La figure 4 est une vue en coupe avec perspective schématique du raccord de la figure 1 an selon un angle de vue différent de l'angle de vue de la figure 2.
[fig. 5] La figure 5 est une vue en perspective schématique d'un raccord tubulaire entre une pluralité de composants tubulaires selon une variante de réalisation de l'invention.

### Description des modes de réalisation

L'exploitation pétrolière, de gaz ou autre nécessite un nombre important de composants tubulaires, aussi appelés tubes. Du fait des nombreuses contraintes que subissent ces composants tubulaires aussi bien lors de leur installation que durant leur exploitation, ces composants tubulaires répondent à des normes afin d'éviter toute dégradation et toute fuite dans l'environnement. Certains composants tubulaires sont reliés bout à bout par leurs extrémités respectives mais il peut être nécessaire de joindre deux composants tubulaires via un raccord. Dans un tel raccord, un composant tubulaire débouche dans un autre composant tubulaire entre les deux extrémités ouvertes dudit autre composant tubulaire.

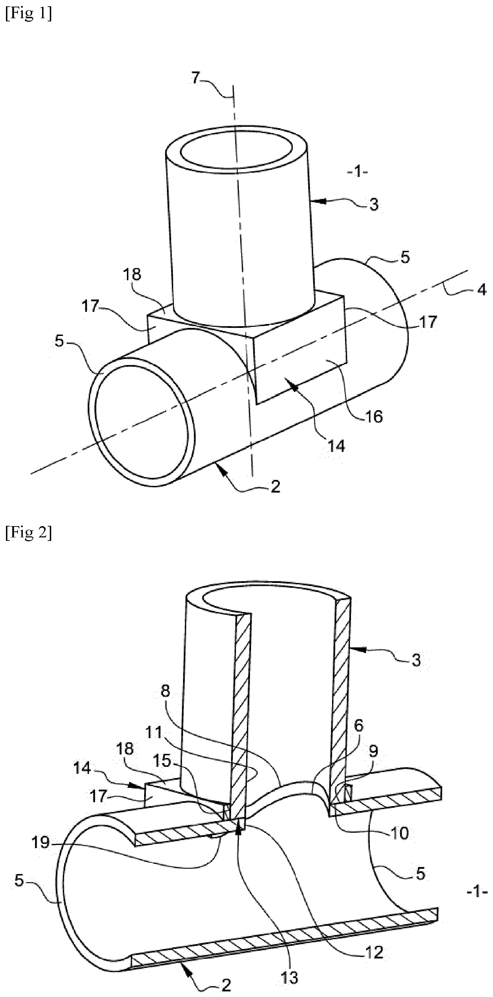

La figure 1 illustre un raccord tubulaire 1 selon l'invention. Un tel raccord tubulaire 1 comporte un premier composant tubulaire 2 et un deuxième composant tubulaire 3.

Sur cette figure 1, le premier composant tubulaire 2 présente un premier axe 4 longitudinal.

Sur la figure 1 le premier composant tubulaire 2 est de courte longueur avec deux extrémités 5 ouvertes mais ce premier composant tubulaire 2 pourrait bien sûr être de plus grande longueur et présenter des caractéristiques telles que des filetages ou autres, non présentées ici pour des questions de simplicité, permettant son raccordement avec d'autres composants tubulaires.

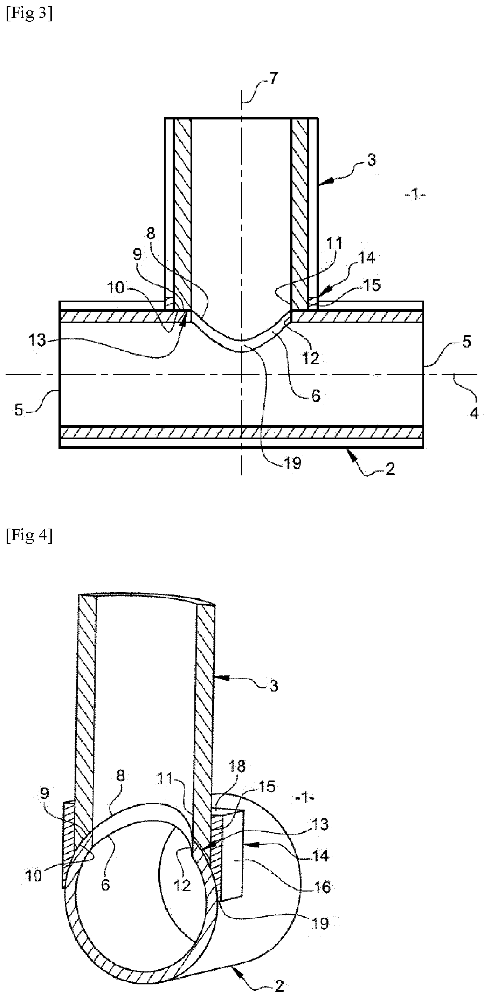

Le premier composant tubulaire 2 comporte un orifice 6 (voir figures 2 à 4) agencé entre lesdites extrémités 5 dans une paroi formant ledit premier composant tubulaire 2. Cet orifice 6 est traversant de la paroi du premier composant tubulaire 2.

Le deuxième composant tubulaire 3 présente un deuxième axe 7 longitudinal. Ce deuxième axe 7 forme un angle avec le premier axe 4, cet angle étant de 90° sur le raccord illustré sur les figures 1 à 4.

Le deuxième composant tubulaire 3 comporte une extrémité ouverte 8. Cette extrémité ouverte 8 est débouche dans le premier composant tubulaire 2 via l'orifice 6. Ainsi, une tranche 9 du deuxième composant tubulaire 3 au niveau de ladite extrémité ouverte 8 présente une forme identique à la forme d'une surface externe 10 du premier composant tubulaire 2 entourant l'orifice 6. Ainsi, une surface interne 11 du deuxième composant tubulaire 3 affleure avec une tranche 12 du premier composant tubulaire 2 délimitée par l'orifice 6. La zone de contact entre la tranche 9 du deuxième composant tubulaire 3 et la surface externe 10 du premier composant tubulaire 2 forme ainsi une zone de jonction 13 entre le premier composant tubulaire 2 et le deuxième composant tubulaire 3.

Afin de solidariser et étanchéifier la zone de jonction 13 entre le premier composant tubulaire 2 et le deuxième composant tubulaire 3, une soudure est réalisée au niveau de ladite zone de jonction 13. Cette soudure est réalisée par un dépôt de matière 14 reposant conjointement contre la surface externe 10 du premier composant tubulaire 2 et contre une surface externe 15 du deuxième composant tubulaire 3 au droit de la zone de jonction 13.

Comme illustré sur les figures 1 à 4, le dépôt de matière 14 n'est pas une simple couche recouvrant le premier composant tubulaire 2 et le deuxième composant tubulaire 3 au niveau de la jonction 13 mais forme un volume de matière entourant lesdits composants tubulaires 2 et 3 au niveau de ladite zone de jonction 13. Ainsi, le dépôt de matière 14 présente une forme sensiblement cubique autour de la zone de jonction 13.

Le dépôt de matière 14 présente ainsi des premières surfaces planes 16, des deuxièmes surfaces planes 17 et des troisièmes surfaces planes 18.

Les premières surface planes 16 se développent dans un plan parallèle au premier axe 4 et parallèle au deuxième axe 7. Les deuxièmes surfaces planes 17 se développent dans un plan perpendiculaire au premier axe 4. Les troisièmes surfaces planes 18 se développent dans un plan parallèle perpendiculaire aux premières surfaces planes 16 et perpendiculaire aux deuxièmes surfaces planes 17. Autrement dit, dans le cadre d'un premier axe 4 et un deuxième axe 7 perpendiculaires comme illustrés sur les figures 1 à 4, les troisièmes surfaces planes 18 se développent perpendiculairement au deuxième axe 7.

De telles surfaces planes 16, 17 et 18 permettent un contrôle de la qualité du dépôt de matière 14 de façon simple et rapide. En effet, de telles surfaces planes 16, 17 et 18 peuvent être inspectées de façon simple et rapide par exemple au moyen d'un contrôle non destructif à base d'ultrasons afin de détecter d'éventuels défauts dans le dépôt de matière 14.

Un tel dépôt de matière 14 est réalisé par dépôt de couches de métal successives le long du deuxième axe 7 depuis une extrémité distale 19 de la zone de jonction 13 jusqu'à recouvrir intégralement la zone de jonction 13. Ainsi, chaque couche du dépôt de matière 14 présente une plus grande épaisseur tant selon le premier axe 4 que perpendiculairement au premier axe 4 et perpendiculairement au deuxième axe 7 que la couche précédente.

Un tel dépôt de matière 14 est par exemple réalisé par impression en trois dimensions, du procédé portant le nom anglais de « additive manufacturing ».

La matière utilisée pour former le dépôt de matière 14 est de préférence du métal, par exemple de l'acier carbone ou inoxydable, ou tout autre métal soudable tel qu'un alliage d'aluminium ou de titane

Le fait que le dépôt de matière 14 ne se limite pas à une simple couche de recouvrement de la zone de jonction 13 offre une surface de dépôt croissante et permet ainsi une stabilité croissante des couches successives du dépôt de matière 14, chaque couche successive reposant sur une plus grande surface de matière que la précédente.

En outre, un tel dépôt de matière 14 présentant de telles surfaces planes 16, 17 et 18 est simple et rapide à traiter, par exemple par usinage pour assurer une bonne planéité desdites surface planes 16, 17 et 18. En effet, un outillage destiné à traiter les surfaces plane 16, 17 et 18 doit simplement se déplacer dans un plan correspondant à la surface plane 16, 17 ou 18 traitée, sans avoir à être déplacé selon une trajectoire complexe pour suivre la zone de jonction 13.

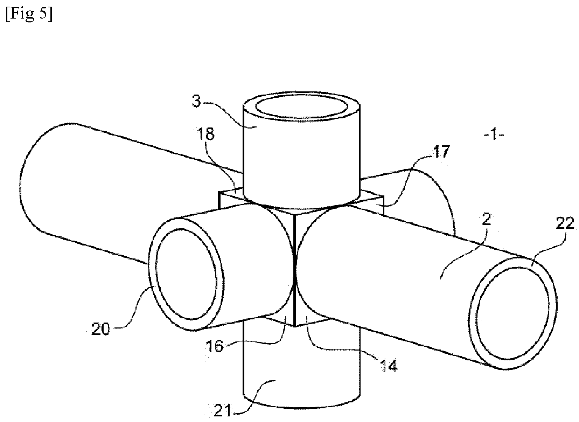

La figure 5 illustre une variante de réalisation de l'invention dans laquelle une pluralité de composants tubulaires sont reliés pour former un raccord. Sur cette figure 5 et dans la description ci-dessous, les éléments identiques et/ou remplissant la même fonction que les éléments décrits ci-dessus en regard des figures 1 à 4 portent la même référence.

Sur cette figure 5 le raccord 1 comporte, en plus du premier composant tubulaire 2 et du deuxième composant tubulaire 3, un troisième composant tubulaire 20, un quatrième composant tubulaire 21 et un cinquième composant tubulaires 22. Le premier composant tubulaire 2 comporte ainsi une pluralité d'orifices 6 (non illustrés sur la figure 5). Chaque orifice 6 forme avec l'un parmi le deuxième composant tubulaire 3, le troisième composant tubulaire 20, le quatrième composant tubulaire 21 et le cinquième composant tubulaire 22 une zone de jonction 13 (non illustrées sur la figure 5) respective. Le dépôt de matière 14 dans ce mode de réalisation est réalisé de façon cubique comme expliqué ci-dessus de manière à former des surfaces planes 16, 17 et 18 entourant toutes les zones de jonction 13.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

Ainsi, les modes de réalisation illustrés sur les figures 1 à 5 présentent des composant tubulaires dont les axes sont perpendiculaires, cependant le raccord peut être formé à partir de composants tubulaires dont les axes ne sont pas perpendiculaires, par exemple à 60°. Dans ce cas, le dépôt de matière demeure préférentiellement de forme cubique autour de la zone de jonction.

Le premier axe et le deuxième axe peuvent être sécants, dans un plan formé par lesdits premier et deuxième axe ou en projection dans un plan parallèle auxdits premier et deuxième axe. Le premier axe et le deuxième axe ne peuvent pas être parallèles.

De même, les composants tubulaires illustrés ci-dessus présentent sensiblement les mêmes diamètres. Cependant le composant tubulaire débouchant dans l'autre composant tubulaire pourrait avoir un diamètre inférieur.

En outre, la zone de jonction illustrée sur les figures 1 à 4 est formée par la surface externe du premier composant tubulaire sur laquelle repose le deuxième composant tubulaire. Cependant, cette zone de jonction pourrait être formée par la tranche 12 de l'orifice 6 et la surface externe du deuxième composant tubulaire, l'extrémité du deuxième composant tubulaire étant insérée dans l'orifice 6 pour déboucher dans le premier composant tubulaire 2.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication

## Revendications

1. Raccord (1) tubulaire métallique comportant un premier composant tubulaire (2) et un deuxième composant tubulaire (3), le premier composant tubulaire (2) et le deuxième composant tubulaire (3) étant métalliques, le premier composant tubulaire (2) se développant selon un premier axe (4), le deuxième composant tubulaire (3) se développant selon un deuxième axe (7), le premier axe (4) et le deuxième axe (7) étant sécants, le premier composant tubulaire (2) comportant un orifice (6), une extrémité ouverte (8) du deuxième composant tubulaire (3) étant jointive du premier composant tubulaire (2) le long d'une zone de jonction (13), ladite zone de jonction (13) étant délimitée par l'orifice (6), le raccord (1) comportant en outre un dépôt de matière (14) au niveau de ladite zone de jonction (13) de manière à assurer une étanchéité de la zone de jonction (13), le dépôt de matière présentant (14) une surface plane se développant dans un plan parallèle au premier axe (4) et parallèle au deuxième axe (7), ladite surface plane étant agencée au droit de la zone de jonction (13).

2. Raccord (1) tubulaire métallique selon la revendication 1, dans lequel la surface plane est une première surface plane (16), le dépôt de matière (14) comportant en outre une deuxième surface plane (17), ladite deuxième surface plane (17) se développant dans un plan perpendiculaire au premier axe (4), ladite deuxième surface plane (17) étant agencée au droit de la zone de jonction (13).

3. Raccord (1) tubulaire métallique selon la revendication 2, dans lequel le dépôt de matière (14) comporte en outre une troisième surface plane (18), ladite troisième surface plane (18) se développant dans un plan perpendiculaire à la première surface plane (16) et perpendiculaire à la deuxième surface plane (17), ladite troisième surface plane (18) étant agencée au droit de la zone jonction (13).

4. Raccord (1) tubulaire métallique selon l'une des revendications 1 à 3, dans lequel le dépôt de matière (14) est en métal.

5. Raccord (1) tubulaire métallique selon l'une des revendications 1 à 4, dans lequel le deuxième composant tubulaire (3) est en matériau identique au matériau du dépôt de matière (14).

6. Procédé de fabrication d'un raccord (1) tubulaire métallique selon l'une des revendications 1 à 5 comportant les étapes de :
a. Fournir un premier composant tubulaire (2), ledit premier composant tubulaire (2) comportant un orifice (6),
b. Fournir un deuxième composant tubulaire (3), ledit deuxième composant tubulaire (3) présentant une extrémité (8) ouverte de forme complémentaire à la forme du premier composant tubulaire (2) au niveau de l'orifice (6) dudit premier composant tubulaire (2),
c. Joindre l'extrémité (8) ouverte du deuxième composant tubulaire (3) et le premier composant tubulaire (2) au niveau de l'orifice (6) de manière à délimiter une zone de jonction (13) entre le premier composant tubulaire (2) et le deuxième composant tubulaire (3) autour de l'orifice (6),
d. Déposer un matériau au niveau de la zone de jonction (13) entre le premier composant tubulaire (2) et le deuxième composant tubulaire (3) de manière à former un dépôt de matière (14) d'une part étanchéifiant la zone de jonction (13) entre le premier composant tubulaire (2) et le deuxième composant tubulaire (3) et, d'autre part, présentant une surface plane (16, 17, 18) au droit de ladite zone de jonction (13).

## Patentansprüche

1. Metallischer rohrförmiger Verbinder (1), umfassend eine erste rohrförmige Komponente (2) und eine zweite rohrförmige Komponente (3), wobei die erste rohrförmige Komponente (2) und die zweite rohrförmige Komponente (3) metallisch sind, wobei sich die erste rohrförmige Komponente (2) entlang einer ersten Achse (4) erstreckt, wobei sich die zweite rohrförmige Komponente (3) entlang einer zweiten Achse (7) erstreckt, wobei sich die erste Achse (4) und die zweite Achse (7) schneiden, wobei die erste rohrförmige Komponente (2) eine Öffnung (6) umfasst, wobei ein offenes Ende (8) der zweiten rohrförmigen Komponente (3) an die erste rohrförmige Komponente (2) entlang eines Fügebereichs (13) anstößt, wobei der Fügebereich (13) durch die Öffnung (6) begrenzt wird, wobei der Verbinder (1) ferner einen Materialauftrag (14) im Bereich des Fügebereichs (13) umfasst, so dass eine Dichtigkeit des Fügebereichs (13) gewährleistet wird, wobei der Materialauftrag (14) eine plane Fläche aufweist, die sich in einer parallel zu der ersten Achse (4) und parallel zu der zweiten Achse (7) verlaufenden Ebene erstreckt, wobei die plane Fläche an dem Fügebereich (13) angeordnet ist.

2. Metallischer rohrförmiger Verbinder (1) nach Anspruch 1, wobei die plane Fläche eine erste plane Fläche (16) ist, wobei der Materialauftrag (14) ferner eine zweite plane Fläche (17) umfasst, wobei sich die zweite plane Fläche (17) in einer senkrecht zu der ersten Achse (4) verlaufenden Ebene erstreckt, wobei die zweite plane Fläche (17) an dem Fügebereich (13) angeordnet ist.

3. Metallischer rohrförmiger Verbinder (1) nach Anspruch 2, wobei der Materialauftrag (14) ferner eine dritte plane Fläche (18) umfasst, wobei sich die dritte plane Fläche (18) in einer senkrecht zu der ersten planen Fläche (16) und senkrecht zu der zweiten planen Fläche (17) verlaufenden Ebene erstreckt, wobei die dritte plane Fläche (18) an dem Fügebereich (13) angeordnet ist.

4. Metallischer rohrförmiger Verbinder (1) nach einem der Ansprüche 1 bis 3, wobei der Materialauftrag (14) aus Metall ist.

5. Metallischer rohrförmiger Verbinder (1) nach einem der Ansprüche 1 bis 4, wobei die zweite rohrförmige Komponente (3) aus einem Werkstoff ist, der identisch mit dem Werkstoff des Materialauftrag (14) ist.

6. Verfahren zur Herstellung eines metallischen rohrförmigen Verbinders (1) nach einem der Ansprüche 1 bis 5, umfassend die folgenden Schritte:
a. Bereitstellen einer ersten rohrförmigen Komponente (2), wobei die erste rohrförmige Komponente (2) eine Öffnung (6) umfasst,
b. Bereitstellen einer zweiten rohrförmigen Komponente (3), wobei die zweite rohrförmige Komponente (3) ein offenes Ende (8) mit einer Form aufweist, die komplementär zu der Form der ersten rohrförmigen Komponente (2) an der Öffnung (6) der ersten rohrförmigen Komponente (2) ist,
c. Fügen des offenen Endes (8) der zweiten rohrförmigen Komponente (3) und der ersten rohrförmigen Komponente (2) an der Öffnung (6), so dass ein Fügebereich (13) zwischen der ersten rohrförmigen Komponente (2) und der zweiten rohrförmigen Komponente (3) um die Öffnung (6) herum begrenzt wird,
d. Auftragen eines Werkstoffs an dem Fügebereich (13) zwischen der ersten rohrförmigen Komponente (2) und der zweiten rohrförmigen Komponente (3), so dass ein Materialauftrag (14) gebildet wird, der zum einen den Fügebereich (13) zwischen der ersten rohrförmigen Komponente (2) und der zweiten rohrförmigen Komponente (3) abdichtet und zum anderen eine plane Fläche (16, 17, 18) an dem Fügebereich (13) aufweist.

## Claims

1. A metal tubular connector (1) comprising a first tubular component (2) and a second tubular component (3), the first tubular component (2) and the second tubular component (3) being metallic, the first tubular component (2) extending along a first axis (4), the second tubular component (3) extending along a second axis (7), the first axis (4) and the second axis (7) intersecting, the first tubular component (2) comprising an opening (6), an open end (8) of the second tubular component (3) being contiguous with the first tubular component (2) along a junction zone (13), the junction zone (13) being delimited by the opening (6), the connector (1) also comprising a material deposit (14) in the junction zone (13) so as to provide a seal for the junction zone (13), the material deposit (14) having a flat surface extending in a plane parallel to the first axis (4) and parallel to the second axis (7), the flat surface being arranged in line with the junction zone (13).

2. The metal tubular connector (1) as claimed in claim 1, wherein the flat surface is a first flat surface (16), the material deposit (14) also comprising a second flat surface (17), the second flat surface (17) extending in a plane perpendicular to the first axis (4), the second flat surface (17) being arranged in line with the junction zone (13).

3. The metal tubular connector (1) as claimed in claim 2, wherein the material deposit (14) also comprises a third flat surface (18), the third flat surface (18) extending in a plane perpendicular to the first flat surface (16) and perpendicular to the second flat surface (17), the third flat surface (18) being arranged in line with the junction zone (13).

4. The metal tubular connector (1) as claimed in any one of claims 1 to 3, wherein the material deposit (14) is made of metal.

5. The metal tubular connector (1) as claimed in any one of claims 1 to 4, wherein the second tubular component (3) is made of the same material as the material of the material deposit (14).

6. A method for manufacturing a metal tubular connector (1) as claimed in any one of claims 1 to 5, comprising the steps of:
a. providing a first tubular component (2), the first tubular component (2) comprising an opening (6),
b. providing a second tubular component (3), the second tubular component (3) having an open end (8) with a shape complementary to the shape of the first tubular component (2) at the opening (6) of the first tubular component (2),
c. joining the open end (8) of the second tubular component (3) and the first tubular component (2) at the opening (6) so as to delimit a junction zone (13) between the first tubular component (2) and the second tubular component (3) around the opening (6),
d. depositing a material in the junction zone (13) between the first tubular component (2) and the second tubular component (3) so as to form a material deposit (14) which, on the one hand, seals the junction zone (13) between the first tubular component (2) and the second tubular component (3) and, on the other hand, has a flat surface (16, 17, 18) in line with the junction zone (13).
